# EUROPEAN PATENT SPECIFICATION

(11) **EP 2 121 369 B1**
(45) Date of publication and mention of the grant of the patent: **03.10.2012**
(21) Application number: 08712801.3
(22) Date of filing: 13.02.2008
(51) Int. Cl.: B60K 15/077, F02D 33/00, B65D 88/54, F02M 37/00

(54) **FUEL PICK-UP ARRANGEMENT FOR A FUEL TANK OF A VEHICLE AND FUEL TANK**
KRAFTSTOFFAUFNAHMEANORDNUNG FÜR EINEN KRAFTSTOFFBEHÄLTER EINES FAHRZEUGS UND KRAFTSTOFFBEHÄLTER
AGENCEMENT DE PRELEVEMENT DE CARBURANT POUR RESERVOIR A CARBURANT D'UN VEHICULE ET RESERVOIR A CARBURANT

(30) Priority: 26.02.2007 SE 0700480
(43) Date of publication of application: 25.11.2009
(73) Proprietor: Scania CV AB, 151 87 Södertälje (SE)
(72) Inventor: LILJEKVIST, Johan, S-118 47 Stockholm (SE); FAGERHOF, Henrik, S-144 33 Rönninge (SE)
(86) International application number: PCT/SE2008/050171
(87) International publication number: WO 2008/105723

(56) References cited:
- EP-A1- 1 593 539
- EP-A2- 1 001 159
- DE-C1- 19 530 256
- FR-A1- 2 702 756
- JP-A- 09 013 928
- JP-A- 62 155 130

## Description

The present invention relates to a fuel pick-up arrangement for a fuel tank of a vehicle, in particular a heavy load vehicle, comprising a fuel pick-up duct having a suction end for picking up fuel from a bottom of said fuel tank, wherein that fuel pick-up duct Is movable in accordance with the actual fuel level within said fuel tank.

Fuel pick-up arrangements for fuel tanks In a vehicle are well known in the art, for example through US 6,176,133 B1 and EP 1 593 539 A1. Such fuel pick-up arrangements are adapted to follow the actual fuel level in said fuel tank in order to provide a safe and permanent fuel supply to the engine. A major requirement of fuel pick-up arrangements is to provide a sufficient fuel supply to the engine, also if the fuel tank only includes a little amount of fuel.

Generic document FR 2 702 756 A1 shows a fuel pick-up arrangement for a fuel tank of a vehicle, comprising a fuel pick-up duct having a suction end for picking up fuel from a bottom of the tank. The fuel pick-up duct Is mounted so that it can move along the bottom of the tank in accordance with the actual fuel level within the tank.

It Is an object of the present invention to provide a fuel pick-up arrangement for a fuel tank of a vehicle, which permits a reliable fuel supply even if the vehicle is operated at a slope.

This object Is solved by a fuel pick-up arrangement for a fuel tank of a vehicle, In particular a heavy load vehicle, comprising a fuel, pick-up duct having a suction end for picking up fuel from the bottom of said fuel tank, wherein said fuel pick-up duct is movable in accordance with the actual fuel level within said fuel tank. According to the invention, the fuel pick-up duct Is slidably arranged close to the bottom of said fuel tank. By providing means for a sliding movement of the fuel pick-up duct close to the bottom of said fuel tank, the invention achieves a reliable movement of the fuel pick-up duct such that the suction end Is always - even in a low filling condition of the fuel tank - in fluidic communication with the remaining fuel included within the tank. Therefore a more reliable fuel supply to the engine can be achieved.

According to the invention, said fuel pick-up duct is mounted to a slide movable along the bottom of said fuel tank. The slide reliably moves along the bottom of said fuel tank such that the fuel pick-up duct is always dipped into the remaining fuel independent on whether the vehicle is operated at a slope or not. In order to facilitate the sliding movement, the slide is movable along a guiding means mounted to said fuel tank which guiding means is mounted on a guide bridge resting on the bottom of said fuel tank. The provision of guiding means prevents an undefined movement of the fuel pick-up duct, as for example can be the case in EP 1 593 539 A1. Preferably, the guiding means are adapted to provide a low-friction movement of the slide. In order to support the movement of the slide to follow the flow the of the fuel within the tank, if the vehicle is operated at a slope, the invention provides that at least one paddle Is mounted to the slide. The paddle has the effect that in a low filing condition of the fuel tank, whenever the fuel flows to one side of the fuel tank, e. g. if the vehicle is operated at a slope, the fuel flowing to the one side impinges on at least one of the paddle surfaces and thereby applies a corresponding force on the paddle. This force acts to move the slide along the guiding means in the direction of the fluid flow. The at least one paddle extends to the bottom of said fuel tank laterally from said guide bridge. Thereby, the above described effect of the paddles can be further improved.

According to one embodiment of the invention, said guiding means is formed by a linear guide, In particular by a rail guide. The guiding means can also be equipped with rolling elements to further reduce the friction.

According to a preferred embodiment of the invention, said guide bridge is formed with an elongated recess movably receiving said fuel pick-up duct therethrough.

According to a preferred embodiment of the invention, it can be provided that two paddles are mounted to said slide wherein said fuel pick-up duct Is mounted to said slide between said paddles.

The fuel pick-up arrangement according to the invention is connected to a fuel pump arranged outside the fuel tank. The slide is therefore connected with the fuel pump by means of a hose arrangement. Preferably, the hose arrangement is at least partially formed by a flexible hose. In order to minimize the resistance against a sliding movement of the slide, the latter can be provided with a rotatable manifold for a connection to the hose arrangement. Thereby, the resistance forces resulting from a bending of the hose arrangement can be compensated by a corresponding rotation of the manifold.

The invention further relates to a fuel tank comprising a fuel pick-up arrangement as described above.

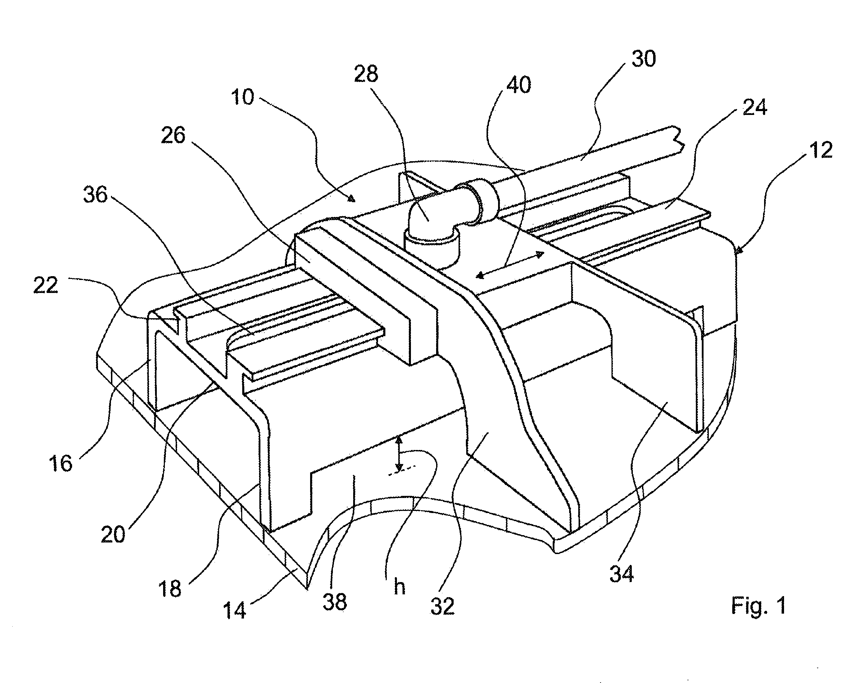

In the following, one embodiment of the invention is described with regard to figure 1, which shows a perspective view of a fuel pick-up arrangement according to the invention.

The fuel pick-up arrangement 10 shown in figure 1 includes a guide bridge 12, which is mounted on a bottom 14 of a vehicle fuel tank (only a section thereof depicted).

The guide bridge 12 Includes two rest portions 16 and 18, which extend in vertical direction and which are connected to one another by means of a support portion 20 running in horizontal direction parallel to the fuel tank bottom 14. At the support portion 20 of the guiding bridge 12, two L-shaped guiding formations 22 and 24 are arranged such that the upper horizontal L-legs are protruding in opposite directions. The L-shaped guiding formations 22, 24 are Interacting with a slide 26, which is slidably movable along the guiding formations 22 and 24 in a low-friction manner. The slide can therefore be equipped with roller elements in order to reduce the friction.

At the upper side of the slide 26, a manifold 28 is rotatably mounted to the slide 26 which is coupled to a flexible hose 30. The flexible hose 30 leads to a fuel pump (not depicted) outside the fuel tank. -

Moreover, two paddles 32 and 34 are fixed to the slide 26. The paddles 32, 34 extend laterally from the slide 26 on both sides of the guide bridge 12 and down to the bottom 14 of the vehicle tank. The paddles 32, 34 always dip into the fuel included within the vehicle tank, even if the fuel level is low.

In the support portion 20 of the guide bridge 12, an elongated opening 36 is provided, through which a fuel pick-up duct reaches from the slide 26 down to the bottom 14 of said fuel tank 26.

Moreover, both vertically extending rest portions 16 and 18 of the guide bridge 12 are formed in their bottom regions with elongated recesses 38 for allowing an unrestricted flow of fuel to the paddles 32 and 34.

The fuel pick-up arrangement 10 according to the invention operates as follows: When the fuel tank is completely or partially filled with fuel, there is no problem as the fuel pick-up duct arranged beneath the slide 26, e. g. close to the bottom 14 of the fuel tank, is completely dipped within fuel. Thus, a reliable fuel supply is guaranteed. However, as soon as a low filing condition of the fuel tank Is reached, e. g. a filing condition, when the fuel level Is beneath the hight h of the recesses 38 within the rest portions 16 and 18, it is necessary that the fuel pick-up duct follows the fuel level in order to provide a sufficient and permanent fuel supply. In such a low filing condition, the fuel impinges on the paddles 32 and 34 when It flows In a certain direction. This is in particular the case, when a vehicle equipped with such an arrangement is operated or parked at a slope. Then the fuel flows to a certain edge region of the fuel tank. During such a flow of fuel to the edge region the fuel impinges onto the two paddles 32 and 34 and thereby applies a force onto these paddles. This force induces a movement of the slide 26 to the respective edge region of the fuel tank to which the fuel has flown.

Therefore, by means of the pick-up arrangement 10 according to the invention, it can be guaranteed that the slide 26 carrying the fuel pick-up duct is always moved by the fuel flow within the fuel tank Into a position, where a sufficient and reliable fuel supply can be guaranteed. The sliding movement of the slide 26 is indicated by arrow 40.

Moreover, by providing a rotatable manifold 28 as well as flexible hose 30, resistances against the sliding movement (indicated by arrow 40) due to a deformation of the hose 30 can be minimized.

The invention provides an easy and reliable way of guaranteeing a permanent fuel supply, even in low filing conditions of the fuel tank.

## Claims

1. Fuel pick-up arrangement (10) for a fuel tank of a vehicle, in particular a heavy load vehicle, comprising a fuel pick-up duct having a suction end for picking up fuel from a bottom (14) of said fuel tank, wherein said fuel pick-up duct Is movable in accordance with the actual fuel level within said fuel tank and is slidably arranged close to the bottom (14) of said fuel tank and is mounted to a slide (26) movable along the bottom (14) of said fuel tank which slide (26) is movable along a guiding means (22, 24) mounted to said fuel tank which guiding means (22, 24) is mounted on a guide bridge (12) resting on the bottom (14) of said fuel tank **characterized in that** at least one paddle (32, 34) is mounted to the slide (26) which paddle extends (32, 34) to the bottom (14) of said fuel tank laterally from said guide bridge (12).

2. Fuel pick-up arrangement (10) according to claim 1,
**characterized In that** said guiding means (22, 24) is formed by a linear guide, in particular by a rail guide.

3. Fuel pick-up arrangement (10) according to claim 1,
**characterized in that** said guide bridge (12) is formed with an elongated recess (36) movably receiving said fuel pick-up duct therethrough.

4. Fuel pick-up arrangement (10) according to claim 1,
**characterized in that** two paddles (32, 34) are mounted to said slide (26) wherein said fuel pick-up duct is mounted to said slide (26) between said paddles (32, 34).

5. Fuel pick-up arrangement (10) according to one of the preceding claims, **characterized in** by a manifold (28) rotatably mounted to said slide (26).

6. Fuel pick-up arrangement (10) according to one of the preceding claims, characterized that said fuel pick-up duct is at least partially formed by a flexible hose (30).

7. Fuel tank 14 comprising a fuel pick-up arrangement (10) according to one of the preceding claims.

## Patentansprüche

1. Kraftstoffaufnahmeanordnung (10) für einen Kraftstofftank eines Fahrzeugs, im Besonderen eines Lastkraftwagens, wobei diese eine Kraftstoffaufnahmeleitung umfasst, der eine Saugseite zur Aufnahme von Kraftstoff von einem Boden (14) des Kraftstofftanks aufweist, wobei die Kraftstoffaufnahmeleitung entsprechend dem tatsächlichen Kraftstofffüllstand im Kraftstofftank bewegbar ist und verschieblich in der Nähe des Bodens (14) des Kraftstofftanks angeordnet ist und an einem Schlitten (26) angebracht ist, der entlang des Bodens (14) des Kraftstofftanks bewegbar ist, wobei der Schlitten (26) entlang eines Führungsmittels (22, 24) bewegbar ist, das am Kraftstofftank angebracht ist, wobei das Führungsmittel (22, 24) an einer Führungsbrücke (12) angebracht ist, die sich am Boden (14) des Kraftstofftanks befindet,
**dadurch gekennzeichnet, dass** mindestens ein Schaufelblatt (32, 34) an dem Schlitten (26) angebracht ist, wobei sich das Schaufelblatt (32, 34) seitlich von der Führungsbrücke bis zum Boden (14) des Kraftstofftanks (12) erstreckt.

2. Kraftstoffaufnahmeanordnung (10) nach Anspruch 1,
**dadurch gekennzeichnet, dass** das Führungsmittel (22, 24) als lineare Führung ausgeführt ist, im Besonderen als Schienenführung.

3. Kraftstoffaufnahmeanordnung (10) nach Anspruch 1,
**dadurch gekennzeichnet, dass** die Führungsbrücke (12) eine längliche Aussparung (36) aufweist, die in beweglicher Weise die Kraftstoffaufnahmeleitung dadurch aufnehmen kann.

4. Kraftstoffaufnahmeanordnung (10) nach Anspruch 1,
**dadurch gekennzeichnet, dass** zwei Schaufelblätter (32, 34) am Schlitten (26) angebracht sind, wobei die Kraftstoffaufnahmeleitung zwischen den Schaufelblättern (32, 34) am Schlitten (26) angebracht ist.

5. Kraftstoffaufnahmeanordnung (10) nach einem der vorhergehenden Ansprüche,
**dadurch gekennzeichnet, dass** ein Krümmer (28) in rotierbarer Weise am Schlitten (26) angebracht ist.

6. Kraftstoffaufnahmeanordnung (10) nach einem der vorhergehenden Ansprüche,
**dadurch gekennzeichnet, dass** die Kraftstoffaufnahmeleitung zumindest teilweise von einem flexiblen Schlauch (30) gebildet ist.

7. Kraftstofftank (14), der eine Kraftstoffaufnahmeanordnung (10) nach einem der vorhergehenden Ansprüche umfasst.

## Revendications

1. Dispositif (10) de prélèvement de carburant (10) destiné à un réservoir de carburant d'un véhicule, en particulier d'un poids lourd, comprenant un conduit de prélèvement de carburant ayant une extrémité d'aspiration pour prélever le carburant d'un fond (14) dudit réservoir de carburant, ledit conduit de prélèvement de carburant étant mobile en fonction du niveau effectif du carburant à l'intérieur dudit réservoir de carburant et étant disposé de façon à coulisser au voisinage immédiat du fond (14) dudit réservoir de carburant et étant monté sur un coulisseau (26) mobile le long du fond (14) dudit réservoir de carburant, le coulisseau (26) étant mobile le long d'un moyen de guidage (22, 24) monté sur ledit réservoir de carburant, ledit moyen de guidage (22, 24) étant monté sur un guide-manchon (12) reposant sur le fond (14) dudit réservoir de carburant, **caractérisé en ce qu'**au moins une palette (32, 34) est montée sur le coulisseau (26), ladite palette s'étendant (32, 34) jusqu'au fond (14) dudit réservoir de carburant, latéralement depuis ledit guide-manchon (12).

2. Dispositif (10) de prélèvement de carburant selon la revendication 1, **caractérisé en ce que** ledit moyen de guidage (22, 24) est formé d'un guide linéaire, en particulier d'une glissière.

3. Dispositif (10) de prélèvement de carburant selon la revendication 1, **caractérisé en ce que** ledit guide-manchon (12) est configuré avec un évidement allongé (36), ledit conduit de prélèvement de carburant y étant logé de façon mobile.

4. Dispositif (10) de prélèvement de carburant selon la revendication 1, **caractérisé en ce que** deux palettes (32, 34) sont montées sur ledit coulisseau (26), ledit conduit de prélèvement de carburant étant monté sur ledit coulisseau (26) entre lesdites palettes (32, 34).

5. Dispositif (10) de prélèvement de carburant selon l'une des revendications précédentes, **caractérisé par** un collecteur (28) monté en rotation sur ledit coulisseau (26).

6. Dispositif (10) de prélèvement de carburant selon l'une des revendications précédentes, **caractérisé en ce que** ledit conduit de prélèvement de carburant est au moins partiellement formé d'un tuyau flexible (30).

7. Réservoir de carburant (14), comprenant un dispositif (10) de prélèvement de carburant selon l'une des revendications précédentes.
